# EUROPEAN PATENT APPLICATION

(11) **EP 3 881 956 A1**
(43) Date of publication of application: **22.09.2021**
(21) Application number: 20305273.3
(22) Date of filing: 17.03.2020
(51) Int. Cl.: B22F 3/00, B29C 64/118, B33Y 10/00, B33Y 70/10, B22F 1/00

(54) **COMPOSITION FOR 3D PRINTING CERAMIC AND/OR METALLIC SHAPED BODIES**

(71) Applicant: Nanoe, 91160 Ballainvilliers (FR)
(72) Inventor: BOUCHET-DOUMENQ, Guillaume, 91170 Viry-Châtillon (FR); FAYE, Romain, 93260 Les Lilas (FR)
(74) Representative: Icosa

(57) **Abstract**

The present invention relates to a composition suitable for 3D printing, said composition being in the form of a filament and comprising: a) a metal and/or ceramic powder; b) an organic binding phase comprising two parts: b1) at least one thermoplastic compound selected from thermoplastic polymers and waxes; and b2) at least one volatile organic compound which has a vapor pressure at 50°C, ranging from more than 0 bar to 0.05 bar, wherein the amount of the at least one volatile organic compound ranges from more than 0.5% to 40% (v/v) by volume relative to the total volume of the composition.

## Description

### FIELD OF INVENTION

The present invention relates to compositions suitable for 3D printing in the form of filaments, or other 3D printing feeding forms. The composition of the invention comprises: a powder, which may be a metal and/or ceramic powder, and an organic binding phase that comprises at least one thermoplastic compound, preferably selected from thermoplastic polymers and waxes, and at least one volatile organic compound. The invention further relates to coils made of filaments of the composition, and to devices able to operate and use the filaments/and or the coils for manufacturing tridimensional objects. The invention also relates to a method for producing a shaped green body by 3D printing as well as to a shaped green body or a shaped body obtained by said method.

### BACKGROUND OF INVENTION

Nowadays, there is an increasing demand of 3D printing technologies and consumables. Most of the currently available 3D printing technologies concern the 3D printing of plastic objects. Hence, limited approaches have been proposed for ceramic and/or metallic object printing. Most of such methods enable implement bed techniques and are costly.

The fused deposition modelling (FDM) process is increasingly being used for manufacturing consumer goods. FDM is considered as an affordable and precise method for 3D printing.

Generally, FDM works by laying down material in layers. In FDM, the model (or part of it) is produced by extruding small beads or streams of material which harden immediately to form layers. In this technique, a filament of thermoplastic material is fed into an extrusion nozzle head (3D printer extruder). The nozzle head heats the material and turns the flow on and off. Typically, stepper motors or servo motors are employed to move the extrusion head and adjust the flow. The printer usually has 3 axes of motion.

It is known that volumetric flow errors of the melted thermoplastic material may compromise the quality of the printed product. Thus, the thermoplastic composition and filament itself has a significant effect on the quality of the printed object. Indeed, the thermoplastic filament needs to be sufficiently rigid so as to be gripped by the extruder, flexible so as to be foiled into a coil and capable of being inserted within the extruder's tubes and of course easy to be handled without breaking.

It is to be pointed out that such mechanical optimizations should not take place at the expense of the filament's or the printed object's thermoplastic properties. Indeed, the filament should melt at the typical 3D printing temperatures while rapidly solidifying at lower temperatures.

In the particular case of ceramic or metal FDM 3D printing, a green body is firstly obtained. The green body is usually debinded from the non-ceramic or non-metal material and sintered to the final form of the 3D printed object.

Usually, the debinding step of the green body is performed by a chemically debinding, that requires to immerse the green body in a suitable solvent in which the organic binding phase of the green body is soluble, and then to dry the shaped body obtained. This step is time consuming, and requires equipment and solvents. Furthermore, this step exposes to the risks of solvent vapors.

Sintering takes place by thermal treatment of the green body. Hence, the formerly melted material should not melt during the sintering step. Furthermore, the evaporated and/or calcinated material during the sintering should not compromise the integrity of the printed object.

In view of the above, there is a need for new feedstock compositions for 3D printing devices which can be formed into a filament and which allows limiting the number of the necessary steps during the process for manufacturing a shaped body by 3D printing and avoiding the use of solvents from which vapors may be toxic for the manufacturers.

### SUMMARY

The present invention relates to a composition suitable for 3D printing, said composition being in the form of a filament and comprising:
a) a metal and/or ceramic powder;
b) an organic binding phase comprising two parts:
   b1) at least one thermoplastic compound, preferably selected from thermoplastic polymers and waxes; and
   b2) at least one volatile organic compound which has a vapor pressure at 50°C, ranging from more than 0 bar to 0.05 bar;
   wherein the amount of the at least one volatile organic compound ranges from more than 0.5% to 40% (v/v) by volume relative to the total volume of the composition.

According to one embodiment, the at least one volatile organic compound has a further vapor pressure at 150°C that is equals or higher than 0.1 bar, preferably ranging from 0.1 bar to 1 bar.

According to one embodiment, the at least one thermoplastic compound is selected from: waxes of parabens, paraffin, esters, and/or fatty alcohols; and thermoplastic homopolymers and/or copolymers of polyolefins, polacrylates, polymethacrylates, poly(alkylene glycol)s, polyamides, polyvinylics, polystyrenes polyacetals, polyesters, and poly(ethylene-vinyl acetate)s.

According to one embodiment, the at least one volatile organic compound is selected from: aromatic compounds, preferably from benzoic acid, phenols, naphtalene, acetamide, 2-bromo-4-phenylphenol, diacetamide, alpha-hydroxyisobutyric acid, 1-naphtol, propionamide, tiglic acid, vanillin, bromoacetic acid, 4-bromobiphenyl, 2-bromo-4,6-dichlorophenol, 4-tert-butylphenol, 4-chlorobiphenyl, coumarin, 1,4-dibromobenzene, d-dimethyl tartrate, maleic anhydride, thymol, trichloroacetic acid and derivatives thereof, in particular phenol; essential oils, preferably essential oils comprising or consisting of citral, isoamyl acetate and/or linalol; and their mixtures thereof.

According to one embodiment, said composition comprises or consists of:
- from 40% to 60% (v/v) of said metal and/or ceramic powder;
- from more than 0.5% to 40% (v/v), preferably from 2% to 10% (v/v), more preferably about 4% (v/v) of said at least one volatile organic compound; and
- from 1% to 59% (v/v) of said at least one thermoplastic compound, the percentages (v/v) being expressed by volume relative to the total volume of the composition.

According to one embodiment, the thermoplastic compound is a mixture of thermoplastic polymers, preferably a mixture of poly(ethylene-vinyl acetate)s, more preferably a mixture of low and high vinyl acetate proportion poly(ethylene-vinyl acetate), even more preferably a mixture of low and high vinyl acetate proportion poly(ethylene-vinyl acetate) having a low to high vinyl acetate proportion poly(ethylene-vinyl acetate) being in a 3:1 to 1:1 volume ratio.

According to one embodiment, the ceramic and/or metal powder is selected from ceramic powder comprising or consisting of one or more minerals, preferably selected from native elements, carbides, sulfides, halides, oxides, hydroxides, carbonates, borates, sulfates, chromates, nitrates, molybdates, tungstates, phosphates, arsenates, vanadates, silicates and aluminosilicates; and metal powder comprising or consisting of one or more component selected from alkali metals, alkaline earth metals, lanthanides, actinides, transition metals, poor metals, metalloids, metal oxides, metal carbides, metal borides and metal nitrides.

According to one embodiment, the ceramic and/or metal powder presents a specific surface ranging from 0.5 to 30 m²/g, measured by a surface area analyzer, preferably said analyzer using a gas sorption method.

According to one embodiment, the filament presents a shore D hardness ranging from 30 to 100 at 20°C measured by a shore durometer.

The invention also relates to a filament coil comprising at least one composition according to the invention.

The invention also relates to a 3D printer for producing shaped bodies, said 3D printer comprising the composition according to the invention or the filament coil according to the invention.

The invention further relates to a method for producing a shaped body, said method comprising:
a) feeding 3D modeling printer, preferably a Fused Deposition Modeling printer, with a filament according to the invention; then
b) printing the shaped green body; then
c) optionally immersing the green body in a solvent for chemically debinding entirely or partially said green body; then
d) optionally smoothing the shaped body of step (b) and/or the shaped body of step (c); then
e) removing the at least one volatile organic compound of the filament composition by heating the green body to a temperature below the melting temperature of the at least one thermoplastic compound of said green body; and then
f) sintering the object of step (e) by heating, leading to the shaped body.

According to one embodiment, the smoothing step (d) is by contacting the surface of the shaped body of step (b) and/or the shaped body of step (c) with a solvent selected from hexane, heptane, octane and mixtures thereof; gasoline, white spirit, benzene; toluene; ortho-, para-, or meta-dimethylbenzene and mixtures thereof; tetrahydrofuran and 2-methyltetrahydrofuran.

According to one embodiment, the sintering of step (f) is by heating at a temperature ranging from about 800°C to about 1700°C.

The invention also relates to a shaped green body or a shaped body obtainable by the method according to the invention.

### DEFINITIONS

In the present invention, the following terms have the following meanings:
- **"About"**: preceding a figure means plus or less 10% of the value of said figure.
- **"Bar"** refers to a metric unit of pressure. One bar is exactly equal to 100 000 Pascal (100 kPa).
- **"Ceramic"** refers to any clay-based material or any non-metallic and inorganic material, obtained upon heated. The term "ceramic" also includes any component encompassed by the definition of "ceramic" given by the American Society for Testing and Materials (ASTM) and that refers to any compound having a vitrified body or not, comprising a crystalline or partially crystalline structure, or of glass, and which is formed of substantially inorganic and non-metallic substance, by a melt which solidifies upon cooling, or which is formed and matured into same time or later by the action of heat. According to one embodiment, the ceramic is a porous ceramic such as pottery and faience. According to one embodiment, the ceramic is a vitrified ceramic such as stoneware and porcelain.
- **"Ceramic injection molding (CIM)"** refers to any manufacturing process used to mass produce ceramic components or ceramic/metal composite, preferably with complex geometries. According to one embodiment, the CIM comprises four steps: mixing, injection, debinding and sintering.
- **"Ceramic and metal powder"** refers to any material under the form of a powder (i) either comprising a ceramic powder and a metallic powder, (ii) or which is a composite powder of a ceramic as defined above and a metal as defined below.
- **"Derivatives"** refers to a molecule that has a relationship with the molecule from which it is derived. It generally refers to structural similarity between a first molecule and a second molecule. The derivative can differ from the molecule from which it is derived by at least one chemical functional group. "Chemical functional group" refers to a sub-molecular structure including an assembly of atoms conferring a reactivity specific to the molecule that it contains, for example an oxy, carbonyl, carboxy, sulfonyl group, etc.
- **"Filament"**: In the present description filament designates a 3D printer feeding form or **feedstock composition** that has the shape of a fine wire. Equivalent and interchangeable 3D printing feeding forms may be selected from at least one bullion, at least one rod or stick, at least one pellet or granule. A person skilled in the art can easily determine the form of the 3D printing material, depending on the type of the 3D printer used.
- **"From X to Y"** refers to the range of values between X and Y, X and Y being included in the said range.
- **"Green body"** refers to a shaped object of a mixture comprising the ceramic and/or metallic material and various organic or inorganic additives. In one embodiment, the organic additives may be a mixture of polymers that in some cases, is removed by chemical or thermic means such as debinding and/or sintering.
- **"Melt flow index"** (MFI) refers to a measure of the ease of flow of the melt of a thermoplastic polymer. It is defined as the mass of polymer, in grams, flowing in ten minutes through a capillary of a specific diameter and length by a pressure applied via prescribed alternative gravimetric weights for alternative prescribed temperatures. Typically, the MFI of polyolefins such as polyethylenes is measured at 190°C. Melt flow rate is an indirect measure of molecular weight, with high melt flow rate corresponding to low molecular weight. MFI is generally recognized in the art and protocols for measuring MFI are well-established in the art. For example, according to the ISO 1133-1 standard, the procedure for determining MFI is as follows:
   - A small amount of the polymer sample (around 4 to 5 grams) is taken in the specially designed MFI apparatus. A die with an opening of typically around 2 mm diameter is inserted into the apparatus.
   - The material is packed properly inside the barrel to avoid formation of air pockets.
   - A piston is introduced which acts as the medium that causes extrusion of the molten polymer.
   - The sample is preheated for a specified amount of time: 5 min at 190 °C for polyethylene.
   - After the preheating a specified weight is introduced onto the piston. Examples of standard weights are 2.16 kg, 5 kg, etc.
   - The weight exerts a force on the molten polymer and it immediately starts flowing through the die.
   - A sample of the melt is taken after the desired period of time and is weighed accurately.
   MFI is expressed in grams of polymer per 10 minutes of duration of the test.
- **"Metal"** refers to any element of the periodic classification selected from alkali metals, alkaline earth metals, lanthanides, actinides, transition metals, poor metals, and metalloids. According to one embodiment, the term "metal" also refers to any compound in which the corresponding atoms are linked by a metallic bond.
- **"Organic binding phase"** refers to a portion of material, in a composition, consisting of organic molecules, and able to (i) agglomerate a metal and/or ceramic powder of said composition and optionally the others components of said composition; and (ii) that may be removed by a debinding step using practical means such as for example by chemical means and/or by heating.
- **"Polyamide"** refers to a family of polymers resulting from the polymerization of a monomer having both an amine function and a carboxylic acid function, or from the polycondensation of a dicarboxylic acid compound with a compound having two amine functions. According to one embodiment, the term "polyamide" refers to any macromolecular chain having repeating units linked each other by an amide bond. **"Polyamide-6-6"** (or **"nylon 6-6")** refers to the polymer or the macromolecular chain obtained by the polycondensation of hexamethylenediamine and adipic acid. **"Polyamide-6-12"** refers to the polymer obtained by the polycondensation of hexamethylenediamine and 1,12-dodecanedioic acid.
- **"Polymers"** refers to materials comprising or consisting of macromolecular chains composed of many repeated subunits. According to the present invention, the term "polymers" includes "copolymers" and "homopolymers". **"Copolymers"** refers to any macromolecular chains having at least two different repeating units; copolymers can be alternating, periodic, statistical, random or block copolymers. **"Homopolymers"** refers to any macromolecular chains having only one single type of repeating unit.
- **"Room temperature"** refers to a temperature ranging from 20°C to 50°C, preferably ranging from 20°C to 30°C, more preferably is about 25°C.
- **"Shore durometer"** refers to any device for measuring the hardness of a material, especially for measuring the hardness of an elastomer, a polymer or a rubber. According to one embodiment, the shore durometer is the durometer HBD 100-0 manufactured by KERN&SOHN GmbH.
- **"Thermoplastic compound"** refers to a material which is capable of being repeatedly softened by heating and hardened by cooling. According to one embodiment, the thermoplastic compound is soft at room temperature. According to one embodiment, the thermoplastic compound is soft at a temperature ranging from 20°C to 200°C.
- **"Thermoplastic polymer"** refers to a polymer that is capable of being repeatedly softened by heating and hardened by cooling. According to one embodiment, the transition temperature T_{g} of a thermoplastic polymer is equal to or less than 20°C. According to one embodiment, the fusion temperature T_{f} of a thermoplastic polymer is equal to or more than 200°C.
- **"Vapor pressure"** refers to the pressure exerted by a vapor in thermodynamic equilibrium with its condensed phases (solid or liquid) at a given temperature in a closed system. Vapor pressure can be measured by measuring the boiling temperature of a purified test substance at different pressures in a Cottrell pump.
- **"Volatile compound"** refers to any substance that evaporates readily at a given temperature. According to one embodiment, a "volatile compound" refers to any substance having, at a given temperature, a high vapor pressure. Especially, a volatile compound has a higher vapor pressure at a given temperature than a non-volatile compound. According to one embodiment, at a temperature equal to or less than 50°C, a volatile compound has a vapor pressure less than 0.1 bar, preferably equal to or less than 0.05 bar, more preferably equal to or less than 0.001 bar. According to one embodiment, at a temperature ranging from 50°C to 200°C, a volatile compound has a vapor pressure ranging from 0.1 bar to 1 bar. According to one embodiment, at a temperature equal to or less than 50°C, a volatile compound has a vapor pressure that is less than 0.1 bar; and a vapor pressure at a temperature ranging from 50°C to 200°C, ranging from 0.1 bar to 1 bar.
- **"Wax"** refers to a class of organic compounds comprising long-chain aliphatic hydrocarbons and that are capable of being repeatedly softened by heating and hardened by cooling. According to one embodiment, the wax is soft at room temperature as defined above, preferably the wax is soft at 25°C.

### DETAILED DESCRIPTION

### Composition

The present invention relates to a composition suitable for 3D printing. Especially, the composition of the invention comprises or consists of at least one metal and/or ceramic powder and at least one binding phase.

According to one embodiment, the binding phase is an organic binding phase. According to one embodiment, the organic binding phase comprises or consists of two phases:
- at least one thermoplastic compound; and
- at least one volatile compound.

According to one embodiment, the thermoplastic compound is selected from thermoplastic polymers, waxes and mixtures thereof.

According to one embodiment, the amount of said at least one volatile organic compound represents from more than 0.5% to 40% (v/v) by volume relative to the total volume of the composition.

According to one embodiment, the amount of said at least one volatile organic compound represents from 1% to 40% (v/v) by volume relative to the total volume of the composition.

According to one embodiment, the ceramic and/or metal powder is sinterable.

Preferably, said composition comprises or consists of:
- from 40% to 60 % (v/v) of said metal and/or ceramic powder;
- from 40% to 60% (v/v) of said organic binding phase comprising:
   - at least one thermoplastic compound, and
   - from more than 0.5% to 40% (v/v) of said at least one volatile organic compound which has a vapor pressure at 50°C from more than 0 bar to 0.05 bar;
the percentages being expressed by volume relative to the total volume of the composition.

Preferably, said composition comprises:
- from 40% to 60 % (v/v), preferably from 45% to 55% (v/v), more preferably about 52% (v/v) of said metal and/or ceramic powder;
- from 1% to 59% (v/v), preferably from 40% to 50% (v/v), more preferably about 45% (v/v) of said at least one thermoplastic compound, and
- from 1% to 40% (v/v), preferably from 2% to 10% (v/v), more preferably about 4% (v/v) of said at least one volatile organic compound which has a vapor pressure at 50°C from more than 0 bar to 0.05 bar;
   the percentages being expressed by volume relative to the total volume of the composition.

Preferably, said composition comprises:
- from 40% to 60 % (v/v), preferably from 45% to 55% (v/v), more preferably about 52% (v/v) of said metal and/or ceramic powder;
- from 1% to 59% (v/v), preferably from 40% to 50% (v/v), more preferably about 45% (v/v) of said at least one thermoplastic compound, and
- from 0.5% to 40% (v/v), preferably from 2% to 10% (v/v), more preferably about 4% (v/v) of said at least one volatile organic compound which has a vapor pressure at 50°C from more than 0 bar to 0.05 bar;
   the percentages being expressed by volume relative to the total volume of the composition.

### Metal powder

According to one embodiment, the composition of the invention comprises from 40% to 60 % (v/v), preferably from 45% to 55% (v/v), more preferably from 50% to 55% (v/v), even more preferably about 52% (v/v) of said metal and/or ceramic powder, the percentages being expressed by volume relative to the total volume of the composition.

According to one embodiment, the composition of the invention comprises from 40% to 45% (v/v), from 40% to 50% (v/v), from 40% to 55 % (v/v), from 40% to 60% (v/v), from 55% to 60% (v/v), from 50% to 60% (v/v), or from 45% to 60% (v/v), of said metal and/or ceramic powder, the percentages being expressed by volume relative to the total volume of the composition.

According to one embodiment, the composition of the invention comprises about 40%, 41%, 42%, 43%, 44%, 45%, 46%, 47%, 48%, 49%, 50%, 51%, 52%, 53%, 54%, 55%, 56%, 57%, 58%, 59%, or 60% (v/v) of said metal and/or ceramic powder, the percentages being expressed by volume relative to the total volume of the composition.

According to one embodiment, the metal powder comprises or consists of one or more component selected from alkali metals, alkaline earth metals, lanthanides, actinides, transition metals, poor metals, metalloids, metal oxides, metal carbides, metal borides and metal nitrides.

According to one embodiment, the metal powder may be any material suitable to be involved in a Metal Injection Molding (MIM), preferably is an alloy, more preferably is selected from alloys of cobalt-chrome, stainless steel, titanium alloys and tungsten carbides.

According to one embodiment, the metal powder is selected from yttrium, yttrium oxide, copper, tan, aluminum, cerium, cerium oxides, uranium, uranium oxides, iron, iron oxides, steel, tungsten, tungsten carbide, strontium titanate, silicon carbide, silicon dioxide, aluminum oxide, zirconium dioxide, titanium dioxide, transition metal oxides such as cobalt dioxide or manganese dioxide, barium, barium titanate, lead zirconate titanate (LZT) and their mixtures thereof.

According to one embodiment, the metal powder is a magnetic powder, preferably a powder comprising or consisting of iron, iron oxides and/or nickel.

According to one embodiment, the metal powder is a piezoelectric powder, preferably selected from titanates, ferrites, tantalates, nobiates and tungsten-bronze compounds, more preferably from barium titanate, lead titanate, potassium nobiate, lithium nobiate, bismuth ferrite, lithium tantalate and lead zirconate titanate (LZT).

In one embodiment, the composition comprises a metal powder such as for example stainless steel.

According to one embodiment, the metal powder comprises or consist of any material that may be sintered.

### Ceramic powder

According to one embodiment, the ceramic powder comprises or consist of one or more minerals, preferably selected from native elements, carbides, sulfides, halides, oxides, hydroxides, carbonates, borates, sulfates, chromates, nitrates, molybdates, tungstates, phosphates, arsenates, vanadates, silicates and aluminosilicates.

According to one embodiment, the ceramic powder comprises or consist of any material that may be sintered.

According to one embodiment, the ceramic powder is a clay, that-is-to say a silicate- or aluminosilicate-based material. According to one embodiment, the ceramic powder is a porcelain, a faience, a pottery or a stoneware.

According to one embodiment, the native element is selected from carbon, sulfur, native silver, native gold, native copper and silicide.

According to one embodiment, the carbide may be a silicon carbide or a tungsten carbide.

According to one embodiment, the ceramic powder may be any material suitable to be involved in a Ceramic Injection Molding (CIM).

### Ceramic/Metal powder

According to one embodiment, the ceramic and metal powder comprises or consists of any powder of one or more metals and ceramics as defined above.

According to one embodiment, the ceramic and metal powder comprises or consists of any material that may be sintered.

In one embodiment, the composition comprises a ceramic powder selected from alumina, zirconia toughened alumina, zirconium oxide, zirconium oxide-b, silicon carbide, tungsten carbide, cobalt doped tungsten and mixtures thereof.

According to one embodiment, the ceramic and/or metal powder is selected from alumina, zirconia toughened alumina, zirconium oxide, zirconium oxide-b (black zirconia), silicon carbide, silicon, titanium dioxide, tungsten, tungsten carbide and stainless steel powders.

### Thermoplastic compound

According to one embodiment, the composition of the invention comprises from 1% to 60% (v/v), preferably from 1% to 59% (v/v), preferably from 40% to 50% (v/v), more preferably from 43% to 47% (v/v), even more preferably about 45% (v/v) of said at least one thermoplastic compound, the percentages being expressed by volume relative to the total volume of the composition.

According to one embodiment, the composition of the invention comprises from 1% to 5% (v/v), from 1% to 10% (v/v), from 1% to 15% (v/v), from 1% to 20% (v/v), from 1% to 25% (v/v), from 1% to 30% (v/v), from 1% to 35% (v/v), from 1% to 40% (v/v), from 1% to 45% (v/v), from 1% to 50% (v/v), from 1% to 55% (v/v), from 1% to 59% (v/v), from 5% to 59% (v/v), from 10% to 59% (v/v), from 15% to 59% (v/v), from 20% to 59% (v/v), from 25% to 59% (v/v), from 30% to 59% (v/v), from 35% to 59% (v/v), from 40% to 59% (v/v), from 45% to 59% (v/v), from 50% to 59% (v/v), or from 55% to 59% (v/v), of said at least one thermoplastic compound, the percentages being expressed by volume relative to the total volume of the composition.

According to one embodiment, the composition of the invention comprises about 1% (v/v), 2% (v/v), 3% (v/v), 4% (v/v), 5% (v/v), 6% (v/v), 7% (v/v), 8% (v/v), 9% (v/v), 10% (v/v), 1 1% (v/v), 12% (v/v), 13% (v/v), 14% (v/v), 15% (v/v), 16% (v/v), 17% (v/v), 18% (v/v), 19% (v/v), 20% (v/v), 21% (v/v), 22% (v/v), 23% (v/v), 24% (v/v), 25% (v/v), 26% (v/v), 27% (v/v), 28% (v/v), 29% (v/v), 30% (v/v), 3 1% (v/v), 32% (v/v), 33% (v/v), 34% (v/v), 35% (v/v), 36% (v/v), 37% (v/v), 38% (v/v), 39% (v/v), 40% (v/v), 41% (v/v), 42% (v/v), 43% (v/v), 44% (v/v), 45% (v/v), 46% (v/v), 47% (v/v), 48% (v/v), 49% (v/v), 50% (v/v), 51% (v/v), 52% (v/v), 53% (v/v), 54% (v/v), 55% (v/v), 56% (v/v), 57% (v/v), 58% (v/v), or 59% (v/v), of said at least one thermoplastic compound, the percentages being expressed by volume relative to the total volume of the composition.

According to one embodiment, the at least one thermoplastic compound is a thermoplastic polymer or a mixture of thermoplastic polymers selected from: polyolefins, polacrylates, polymethacrylates, poly(alkylene glycol)s, polyamides, polyvinylics, polystyrenes, polyacetals, polyesters and their copolymers thereof.

According to one embodiment, the at least one thermoplastic compound is a wax of one or more of parabens, paraffin, esters and fatty alcohols.

According to one embodiment, the paraben may be n-octyl 4-hydroxybenzoate, propyl 4-hydroxybenzoate or 4-hydroxybenzoate.

According to one embodiment, the ester is methyl octadecanoate, 2-butoxy ethanol acetate, glycerol monostearate, zinc octadecanoate, dimethyl phtalate or methyl -3 -hydroxybenzoate.

According to one embodiment, the fatty alcohol is dodecan-1-ol or 1-docosanol.

According to one embodiment, the thermoplastic polymer is selected from polyethylene glycol (PEG), poly(propylene glycol) (PPG), polyvinyl alcohol (PVA), polyvinyl acetate (PVAc), polyvinyl butyrate (PVB), polymethacrylates such as poly(methyl methacrylate) (PMMA), polyacrylates such as poly(butyl acrylate), poly(ethylene-vinyl acetate).

According to one embodiment, the thermoplastic compounds are a mixture of thermoplastic polymers which may be homopolymers of thermoplastic macromolecular chains and/or copolymers of thermoplastic macromolecular chains.

According to one embodiment, the at least one thermoplastic compound comprises or consists of parabens, paraffin, poly(alkylene glycol), polyolefins, polyvinylics and mixtures thereof.

According to one embodiment, the at least one thermoplastic compound comprises or consists of parabens, paraffin, polypropylene glycol, polyvinyl acetate, polyvinyl butyrate, polyethylene glycol, polyvinyl alcohol, low density polyethylene, poly(propylene), polyamide, poly(ethylene-vinyl acetate) and mixtures thereof.

According to one embodiment, the at least one thermoplastic compound comprises or consists of paraffin, polyethylene glycol, polyvinyl alcohol, low density polyethylene, polyamide, poly(ethylene-vinyl acetate), polymethacrylates such as poly(methyl methacrylate) (PMMA), and mixtures thereof.

### PEVA

According to one embodiment, the at least one thermoplastic compound comprises or consists of at least one poly(ethylene-vinyl acetate) (PEVA), which is a copolymer of ethylene and vinyl acetate. The weight percent vinyl acetate may vary in the at least one PEVA included in the composition of the invention from 10% to 40 % (w/w), with the remainder being ethylene.

Broadly speaking, there are three different types of PEVA copolymers, which differ in the vinyl acetate (VA) content and the way the materials are used:
- a PEVA copolymer with a low proportion of VA (more than 0% to 4 % (w/w) by weight of VA to the total weight of the PEVA chain), which may be referred to as vinyl acetate modified polyethylene;
- a PEVA copolymer with a medium proportion of VA (more than 4% to 30 % (w/w) by weight of VA to the total weight of the PEVA chain) which may be referred to as thermoplastic ethylene-vinyl acetate copolymer and is a thermoplastic elastomer material;
- a PEVA copolymer which is based on a high proportion of VA (greater than 30 %(w/w), preferably greater than 35%(w/w), more preferably greater than 40%(w/w) by weight in VA to the total weight of the PEVA chain) which may be referred to as ethylene-vinyl acetate rubber.

According to a first embodiment, the composition comprises at least 2 % (v/v) of at least one poly(ethylene-vinyl acetate), in volume relative to the total composition. In one embodiment, the composition comprises at least 4 % (v/v) of at least one poly(ethylene-vinyl acetate), in volume relative to the total composition. In one embodiment, the composition comprises at least 6 % (v/v) of at least one poly(ethylene-vinyl acetate), in volume relative to the total volume of said composition.

In one embodiment, the poly(ethylene-vinyl acetate) is in an amount ranging from 2 % to 15 % (v/v), in volume relative to the total volume of said composition.

According to a preferred embodiment, the poly(ethylene-vinyl acetate) present in the composition of the invention is a mixture of medium and high vinyl acetate proportion poly(ethylene-vinyl acetate). In one embodiment, the mixture comprises medium poly(ethylene-vinyl acetate) comprising more than 4 % to 30 % (w/w) of vinyl acetate, relative to the poly(ethylene-vinyl acetate) total weight; and high vinyl acetate proportion poly(ethylene-vinyl acetate) comprising at least 35 % (w/w) of vinyl acetate, relative to the poly(ethylene-vinyl acetate) weight.

In one embodiment, the mixture comprises medium poly(ethylene-vinyl acetate) comprising 12 % to 30 % (w/w) of vinyl acetate, relative to the poly(ethylene-vinyl acetate) total weight; and high vinyl acetate proportion poly(ethylene-vinyl acetate) comprising at least 35 % (w/w) of vinyl acetate, relative to the poly(ethylene-vinyl acetate) weight.

In one embodiment, the mixture comprises medium poly(ethylene-vinyl acetate) comprising 12 % to 30 % (w/w) of vinyl acetate, relative to the poly(ethylene-vinyl acetate) total weight; and high vinyl acetate proportion poly(ethylene-vinyl acetate) comprising about 40 % (w/w) of vinyl acetate, relative to the poly(ethylene-vinyl acetate) weight.

In one embodiment, the mixture comprises medium poly(ethylene-vinyl acetate) comprising 25 % to 30 % (w/w) of vinyl acetate, relative to the poly(ethylene-vinyl acetate) total weight; and high vinyl acetate proportion poly(ethylene-vinyl acetate) comprising about 40 % (w/w) of vinyl acetate, relative to the poly(ethylene-vinyl acetate) weight.

In one particular embodiment, the poly(ethylene-vinyl acetate) is a mixture of poly(ethylene-vinyl acetate) comprising about 28 % (w/w) of vinyl acetate; and poly(ethylene-vinyl acetate) comprising about 40 % (w/w) of vinyl acetate, relative to the poly(ethylene-vinyl acetate) weight.

In one particular embodiment, the medium poly(ethylene-vinyl acetate) is Elvax® 220W (DuPont™). In one particular embodiment, the high poly(ethylene-vinyl acetate) is Elvax® 40W (DuPont™).

In a preferred embodiment, mixture of medium and high vinyl acetate proportion poly(ethylene-vinyl acetate) is in a 3:1 to 1:1 ratio. According to one embodiment, the mixture of PEVA comprises 30% (v/v) of PEVA with medium VA proportion and 70% (v/v) of PEVA with high VA proportion.

In an embodiment, the composition comprises a mixture of medium and high vinyl acetate proportion poly(ethylene-vinyl acetate) in a volume ratio of about 1:1.

In one embodiment, the medium vinyl acetate proportion poly(ethylene-vinyl acetate) presents a melt flow index ranging from 100 g to 200 g/10 min (190°C, 2.16kg). In one embodiment, the medium vinyl acetate proportion poly(ethylene-vinyl acetate) presents a melt flow index ranging from 130 to 170 g/lOmin (190°C, 2.16kg). In one embodiment, the medium vinyl acetate proportion poly(ethylene-vinyl acetate) presents a melt flow index of 150 g/lOmin (190°C, 2.16kg).

In one embodiment, the high vinyl acetate proportion poly(ethylene-vinyl acetate) presents a melt flow index ranging from 35 to 400 g/lOmin (190°C, 2.16kg). In one embodiment, the high vinyl acetate proportion poly(ethylene-vinyl acetate) presents a melt flow index ranging from 40 to 100 g/lOmin (190°C, 2.16kg). In one embodiment, the high vinyl acetate proportion poly(ethylene-vinyl acetate) presents a melt flow index ranging from 40 to 80 g/lOmin (190°C, 2.16kg). In one embodiment, the high vinyl acetate proportion poly(ethylene-vinyl acetate) presents a melt flow index ranging from 40 to 60 g/lOmin (190°C, 2.16kg). In one embodiment, the high vinyl acetate proportion poly(ethylene-vinyl acetate) presents a melt flow index of about 55, about 56, about 57, about 58, about 59 or about 60 g/lOmin (190°C, 2.16kg). In one embodiment, the high vinyl acetate proportion poly(ethylene-vinyl acetate) presents a melt flow index of 52 g/lOmin (190°C, 2.16kg).

### Polyamide

According to one embodiment, the at least one thermoplastic compound comprises or consists of a polyamide, preferably selected from polyamide 6-6 and polyamide 6-12.

According to one embodiment, the at least one thermoplastic compound comprises or consists of a polyamide 6-6.

According to one embodiment, the at least one thermoplastic compound comprises or consists of a polyamide 6-12.

### Polypropylene

According to one embodiment, the at least one thermoplastic compound comprises or consists of poly(propylene).

### PMMA

According to one embodiment, the at least one thermoplastic compound comprises or consists of polymethacrylates such as poly(methyl methacrylate) (PMMA).

### Paraffin

According to one embodiment, the at least one thermoplastic compound comprises or consists of paraffin.

According to one embodiment, said paraffin has a melting point that ranges from 53°C to 58°C as measured by the standard test method ASTM D87.

### Mix of thermoplastic compounds

According to one embodiment, the at least one thermoplastic compound comprises or consists of:
- poly(ethylene-vinyl acetate)s, preferably a mixture of medium and high vinyl acetate proportion poly(ethylene-vinyl acetate) in a volume ratio from 3:1 to 1:1, more preferably a mixture of poly(ethylene-vinyl acetate) comprising about 28 % (w/w) of vinyl acetate and of poly(ethylene-vinyl acetate) comprising about 40 % (w/w) of vinyl acetate, relative to the poly(ethylene-vinyl acetate) weight, in a volume ratio of about 1:1;
- paraffin; and
- polyamide 6-6.

According to another embodiment, the at least one thermoplastic compound comprises or consists of:
- poly(ethylene-vinyl acetate)s, preferably a mixture of medium and high vinyl acetate proportion poly(ethylene-vinyl acetate) in a volume ratio from 3:1 to 1:1, more preferably a mixture of poly(ethylene-vinyl acetate) comprising about 28 % (w/w) of vinyl acetate and of poly(ethylene-vinyl acetate) comprising about 40 % (w/w) of vinyl acetate, relative to the poly(ethylene-vinyl acetate) weight, in a volume ratio of about 1:1;
- paraffin; and
- polyamide 6-12.

According to another embodiment, the at least one thermoplastic compound comprises or consists of:
- poly(ethylene-vinyl acetate)s, preferably a mixture of medium and high vinyl acetate proportion poly(ethylene-vinyl acetate) in a volume ratio from 3:1 to 1:1, more preferably a mixture of poly(ethylene-vinyl acetate) comprising about 28 % (w/w) of vinyl acetate and of poly(ethylene-vinyl acetate) comprising about 40 % (w/w) of vinyl acetate, relative to the poly(ethylene-vinyl acetate) weight, in a volume ratio of about 1:1;
- paraffin; and
- poly(propylene).

According to another embodiment, the at least one thermoplastic compound comprises or consists of:
- poly(ethylene-vinyl acetate)s, preferably a mixture of medium and high vinyl acetate proportion poly(ethylene-vinyl acetate) in a volume ratio from 3:1 to 1:1, more preferably a mixture of poly(ethylene-vinyl acetate) comprising about 28 % (w/w) of vinyl acetate and of poly(ethylene-vinyl acetate) comprising about 40 % (w/w) of vinyl acetate, relative to the poly(ethylene-vinyl acetate) weight, in a volume ratio of about 1:1;
- paraffin;
- poly(propylene) or polyamide 6-12 or polyamide 6-6; and
- poly(methyl methacrylate) (PMMA).

According to another embodiment, the at least one thermoplastic compound comprises or consists of:
- from 1% to 57% (v/v), preferably from 15% to 40% (v/v), more preferably from 20% to 30% (v/v), even more preferably about 26.8% (v/v) of poly(ethylene-vinyl acetate)s, preferably a mixture of medium and high vinyl acetate proportion poly(ethylene-vinyl acetate) in a volume ratio from 3:1 to 1:1, more preferably a mixture of poly(ethylene-vinyl acetate) comprising about 28 % (w/w) of vinyl acetate by weight relative to the poly(ethylene-vinyl acetate) weight, and of poly(ethylene-vinyl acetate) comprising about 40 % (w/w) of vinyl acetate by weight relative to the poly(ethylene-vinyl acetate) weight, in a volume ratio of about 1:1;
- from 1% to 25% (v/v), preferably from 5% to 20% (v/v), more preferably from 10% to 15% (v/v), even more preferably about 13.7% (v/v) of paraffin;
- from 1% to 10% (v/v), preferably from 2% to 6% (v/v), more preferably from 3% to 5% (v/v), even more preferably about 3.8% (v/v) of poly(propylene) or polyamide 6-12 or polyamide 6-6; and
- optionally, from 1% to 10% (v/v), preferably from 2% to 6% (v/v), more preferably from 3% to 5% (v/v), even more preferably about 3.8% (v/v) of poly(methyl methacrylate) (PMMA),
the percentages (v/v) being expressed by volume relative to the total volume of the composition.

### Volatile organic compound

According to one embodiment, the composition of the invention comprises from 1% to 40% (v/v), preferably from 1% to 10% (v/v), preferably from 2% to 10% (v/v), more preferably about 4% (v/v) of said at least one volatile organic compound, the percentages being expressed by volume relative to the total volume of the composition.

According to one embodiment, the composition of the invention comprises from more than 0.5% to 40% (v/v), preferably from more than 0.5% to 10% (v/v), preferably from 1% to 10% (v/v), more preferably about 4% (v/v) of said at least one volatile organic compound, the percentages being expressed by volume relative to the total volume of the composition. According to one embodiment, the composition of the invention comprises from more than 0% to 6% (v/v), preferably from 0.5% to 6% (v/v), preferably from 1% to 6% (v/v), more preferably about 4% (v/v) of said at least one volatile organic compound, the percentages being expressed by volume relative to the total volume of the composition.

According to one embodiment, the composition of the invention comprises from more than 0% to 6% (v/v), preferably from 0.5% to 6% (v/v), preferably from 1% to 6% (v/v), more preferably about 4% (v/v) of phenol, the percentages being expressed by volume relative to the total volume of the composition.

According to one embodiment, the composition of the invention comprises from 0.5% to 1% (v/v), from 1% to 5% (v/v), from 1% to 10% (v/v), from 1% to 15% (v/v), from 1% to 20% (v/v), from 1% to 25% (v/v), from 1% to 30% (v/v), from 1% to 35% (v/v), from 1% to 40% (v/v), from 35% to 40% (v/v), from 30% to 40% (v/v), from 25% to 40% (v/v), from 20% to 40% (v/v), from 15% to 40% (v/v), from 10% to 40% (v/v), or from 5% to 40% (v/v) of said at least one volatile organic compound, the percentages being expressed by volume relative to the total volume of the composition. According to one embodiment, the composition of the invention comprises about 0.5% (v/v), 0.6% (v/v), 0.7% (v/v), 0.8% (v/v), 0.9% (v/v), 1.0% (v/v), 1.25% (v/v), 1.5% (v/v), 1.75% (v/v), 2.0% (v/v), 2.25% (v/v), 2.5% (v/v), 2.75% (v/v), 3.0% (v/v), 3.25% (v/v), 3.5% (v/v), 3.75% (v/v), 4.0% (v/v), 4.25% (v/v), 4.5% (v/v), 4.75% (v/v), 5.0% (v/v), 5.25% (v/v), 5.5% (v/v), 5.75% (v/v), 6.0% (v/v), 6.25% (v/v), 6.5% (v/v), 6.75% (v/v), 7% (v/v), 8% (v/v), 9% (v/v), 10% (v/v), 11% (v/v), 12% (v/v), 13% (v/v), 14% (v/v), 15% (v/v), 16% (v/v), 17% (v/v), 18% (v/v), 19% (v/v), 20% (v/v), 21% (v/v), 22% (v/v), 23% (v/v), 24% (v/v), 25% (v/v), 26% (v/v), 27% (v/v), 28% (v/v), 29% (v/v), 30% (v/v), 3 1% (v/v), 32% (v/v), 33% (v/v), 34% (v/v), 35% (v/v), 36% (v/v), 37% (v/v), 38% (v/v), 39% (v/v), or 40% (v/v) of said at least one volatile organic compound, the percentages being expressed by volume relative to the total volume of the composition.

According to one embodiment, the ratio r of the volume content of the at least one volatile organic compound in the composition to the volume content of the at least one thermoplastic compound in the composition, ranges from 0.0001 to 40, preferably from 0.01 to 20, more preferably from 0.1 to 10. According to one embodiment, the ratio r of the volume content of the at least one volatile organic compound in the composition to the volume content of the at least one thermoplastic compound in the composition, ranges from 0.001 to 10, preferably from 0.01 to 3, more preferably is about 2. According to one embodiment, the ratio r of the volume content of the at least one volatile organic compound in the composition to the volume content of the at least one thermoplastic compound in the composition, ranges from 0.001 to 0.20, preferably from 0.05 to 0.15, more preferably from 0.06 to 0.10, even more preferably about 0.08, even more preferably about 0.083.

### First vapor pressure (at 50°C)

According to one embodiment, the at least one volatile organic compound has a vapor pressure at 50°C, ranging from more than 0 bar to 0.05 bar. Advantageously, the composition of the invention, under a filament form, remains physically and chemically stable, at a temperature below 50°C. Advantageously, the filament of the invention may be stored and/or transported at ambient temperature without altering the integrity of filament.

According to one embodiment, the at least one volatile organic compound has a vapor pressure at 50°C that ranges from 0.00001 bar to 0.05 bar, preferably from 0.0001 bar to 0.05 bar, more preferably from 0.001 bar to 0.05 bar, even more preferably 0.001 bar.

According to one embodiment, the at least one volatile organic compound has a vapor pressure at 50°C that ranges from 0.00001 bar to 0.00005 bar, from 0.00001 bar to 0.0001 bar, from 0.00001 bar to 0.0005 bar, from 0.00001 bar to 0.001 bar, from 0.00001 bar to 0.005 bar, from 0.00001 bar to 0.01 bar, from 0.00001 bar to 0.05 bar, from 0.00005 bar to 0.05 bar, from 0.0001 bar to 0.05 bar, from 0.0005 bar to 0.05 bar, from 0.001 bar to 0.05 bar, from 0.005 bar to 0.05 bar, or from 0.01 bar to 0.05 bar.

According to one embodiment, the at least one volatile organic compound has a vapor pressure at 50°C that is about 0.00001 bar; 0.000025 bar; 0.00005 bar; 0.000075 bar; 0.0001 bar; 0.00025 bar; 0.0005 bar; 0.00075 bar; 0.001 bar; 0.0025 bar; 0.005 bar; 0.0075 bar; 0.01 bar; 0.025 bar; or 0.05 bar.

### Second vapor pressure characterizing the volatile compound

According to one embodiment, the at least one volatile organic compound further comprises a second vapor pressure equals to or higher than 0.1 bar, at a temperature below 50°C relative to the melting temperature of the at least one thermoplastic compound.

According to one embodiment, the at least one volatile organic compound further comprises a second vapor pressure equals to or higher than 0.1 bar, at a temperature below 50°C relative to the melting temperature of the at least one thermoplastic compound, said melting temperature ranging from 100°C to 200°C.

According to one embodiment, the at least one volatile organic compound further comprises a second vapor pressure ranging from 0.1 bar to 1 bar, at a temperature below 50°C relative to the melting temperature of the at least one thermoplastic compound.

According to one embodiment, the at least one volatile organic compound further comprises a second vapor pressure ranging from 0.1 bar to 1 bar, at a temperature below 50°C relative to the melting temperature of the at least one thermoplastic compound, said melting temperature ranging from 100°C to 200°C.

According to one embodiment, the melting temperature of the at least one thermoplastic compound is about 100°C, 110°C, 120°C, 130°C, 140°C, 150°C, 160°C, 170°C, 180°C, 190°C or 200°C.

According to another embodiment, the at least one volatile organic compound has:
- a first vapor pressure at 50°C, ranging from more than 0 bar to 0.05 bar; and
- a second vapor pressure at a temperature below 50°C relative to the melting temperature of the at least one thermoplastic compound, equals to or higher than 0.1 bar; preferably ranging from 0.1 bar to 1 bar.

According to one embodiment, the at least one volatile organic compound has a vapor pressure at 150°C that ranges from 0.1 bar to 1 bar, preferably from 0.1 bar to 0.5 bar, more preferably from 0.1 bar to 0.2 bar, even more preferably 0.1 bar.

According to one embodiment, the at least one volatile organic compound has a vapor pressure at 150°C that ranges from 0.10 bar to 0.15 bar, from 0.10 bar to 0.20 bar, from 0.10 bar to 0.25 bar, from 0.10 bar to 0.30 bar, from 0.10 bar to 0.35 bar, from 0.10 bar to 0.40 bar, from 0.10 bar to 0.45 bar, from 0.10 bar to 0.50 bar, from 0.10 bar to 0.55 bar, from 0.10 bar to 0.60 bar, from 0.10 bar to 0.65 bar, from 0.10 bar to 0.70 bar, from 0.10 bar to 0.75 bar, from 0.10 bar to 0.80 bar, from 0.10 bar to 0.85 bar, from 0.10 bar to 0.90 bar, from 0.10 bar to 0.95 bar, from 0.10 bar to 1 bar, from 0.15 bar to 1 bar, from 0.20 bar to 1 bar, from 0.25 bar to 1 bar, from 0.30 bar to 1 bar, from 0.35 bar to 1 bar, from 0.40 bar to 1 bar, from 0.45 bar to 1 bar, from 0.50 bar to 1 bar, from 0.55 bar to 1 bar, from 0.60 bar to 1 bar, from 0.65 bar to 1 bar, from 0.70 bar to 1 bar, from 0.75 bar to 1 bar, from 0.80 bar to 1 bar, from 0.85 bar to 1 bar, from 0.90 bar to 1 bar, or from 0.95 bar to 1 bar.

According to one embodiment, the at least one volatile organic compound has a vapor pressure at 150°C that is about 0.10 bar; 0.11 bar; 0.12 bar; 0.13 bar; 0.14 bar; 0.15 bar; 0.16 bar; 0.17 bar; 0.18 bar; 0.19 bar; 0.20 bar; 0.21 bar; 0.22 bar; 0.23 bar; 0.24 bar; 0.25 bar; 0.26 bar; 0.27 bar; 0.28 bar; 0.29 bar; 0.30 bar; 0.31 bar; 0.32 bar; 0.33 bar; 0.34 bar; 0.35 bar; 0.36 bar; 0.37 bar; 0.38 bar; 0.39 bar; 0.4 bar; 0.5 bar; 0.6 bar; 0.7 bar; 0.8 bar; 0.9 bar; or 1 bar.

Indeed, the Applicant have surprisingly found that the addition of a volatile organic compound as described in this application to a composition suitable for 3D printing, allows to:
- increase the melt flow index of the composition before any heating treatment of said composition, preferably increase the melt flow index above 100g/10min (160°C/5kg);
- let a part of said volatile organic compound evaporate at the temperature of 3D printing, that is at temperature from 100°C to 200°C;
- obtain a shaped green body made of a material whose melt flow index is less than 100 g /10min (160°C/5kg), preferably less than 80g /10 min (160°C/5kg), more preferably about 60g /10min (160°C/5kg), the material comprising advantageously a network of porosity. Said green body will advantageously not melt during the sintering step or during any other heating treatment.

According to one embodiment, the at least one volatile organic compound is selected from:
- aromatic compounds, preferably from benzoic acid, phenols, naphtalene, acetamide, 2-bromo-4-phenylphenol, diacetamide, alpha-hydroxyisobutyric acid, 1-naphtol, propionamide, tiglic acid, vanillin, bromoacetic acid, 4-bromobiphenyl, 2-bromo-4,6-dichlorophenol, 4-tert-butylphenol, 4-chlorobiphenyl, coumarin, 1,4-dibromobenzene, d-dimethyl tartrate, maleic anhydride, thymol, trichloroacetic acid and derivatives thereof, in particular phenol;
- essential oils, preferably essential oils comprising or consisting of citral, isoamyl acetate and/or linalol;
- and their mixtures thereof.

According to one embodiment, the composition suitable for 3D printing according to the invention comprises:
a) from 40% to 60% (v/v) of a metal and/or ceramic powder, preferably a stainless steel powder;
b) from 40% to 60% (v/v) of an organic binding phase comprising two parts:
   b1) from 1% to 59% (v/v) of at least one thermoplastic compound, preferably said at least one thermoplastic compound comprises or consists of:
      - from 1% to 5% (v/v), preferably from 1% to 3% (v/v), more preferably about 3% (v/v) of paraffin;
      - from 2% to 10% (v/v), preferably from 4% to 8% (v/v), more preferably about 6% (v/v) of a mixture of poly(ethylene-vinyl acetate) comprising about 28 % (w/w) of vinyl acetate by weight relative to the poly(ethylene-vinyl acetate) weight, and of poly(ethylene-vinyl acetate) comprising about 40 % (w/w) of vinyl acetate by weight relative to the poly(ethylene-vinyl acetate) weight, in a volume ratio of about 1:1; and
      - from 0.5% to 3% (v/v), preferably from 1% to 3% (v/v), preferably about 1% (v/v) of polyamide 6-12; and
   b2) from more than 0.5% to 40% (v/v) of at least one volatile organic compound which has a vapor pressure at 50°C from more than 0 bar to 0.05 bar, preferably selected from phenol and citral, more preferably is phenol,
the percentages (v/v) being expressed by volume relative to the total volume of the composition.

### Composition

According to one embodiment, the composition of the invention comprises or consists of:
- from 40% to 60% (v/v), preferably from 45% to 55% (v/v), more preferably from 50% to 53% (v/v), even more preferably about 51.9% (v/v) of stainless steel powder;
- from 1% to 57% (v/v), preferably from 15% to 40% (v/v), more preferably from 20% to 30% (v/v), even more preferably about 26.8% (v/v) of poly(ethylene-vinyl acetate)s; preferably a mixture of about 13.5% (v/v) of medium vinyl acetate proportion poly(ethylene-vinyl acetate) and of about 13.3% (v/v) of high vinyl acetate proportion poly(ethylene-vinyl acetate);
- from 1% to 25% (v/v), preferably from 5% to 20% (v/v), more preferably from 10% to 15% (v/v), even more preferably about 13.7% (v/v) of paraffin;
- from 1% to 10% (v/v), preferably from 2% to 6% (v/v), more preferably from 3% to 5% (v/v), even more preferably about 3.8% (v/v) of polyamide 6-6; and
- from more than 0.5% to 40% (v/v), preferably from 1% to 10% (v/v), more preferably from 3% to 5% (v/v), even more preferably about 3.7% (v/v) of phenol or citral,
the percentages (v/v) being expressed by volume relative to the total volume of the composition.

Advantageously, the medium vinyl acetate proportion poly(ethylene-vinyl acetate) is Elvax® 220W (DuPont™, 28 % (w/w) Vinyl Acetate comonomer content; Melt flow index (190°C/2.16kg): 150 g/10 min; Melting Point (DSC): 70°C).

Advantageously, the high vinyl acetate proportion poly(ethylene-vinyl acetate) is Elvax® 40W (DuPont™, 40 % (w/w) Vinyl Acetate comonomer content; Melt flow index (190°C/2.16kg): 52 g/10 min; Melting Point (DSC): 47°C).

Advantageously, the polyamide 6-6 is Orgasol® 3502 D NAT 1.

More advantageously, the medium vinyl acetate proportion poly(ethylene-vinyl acetate) is Elvax® 220W (DuPont™, 28 % (w/w) Vinyl Acetate comonomer content; Melt flow index (190°C/2.16kg): 150 g/10 min; Melting Point (DSC): 70°C); the high vinyl acetate proportion poly(ethylene-vinyl acetate) is Elvax® 40W (DuPont™, 40 % (w/w) Vinyl Acetate comonomer content; Melt flow index (190°C/2.16kg): 52 g/10 min; Melting Point (DSC): 47°C); and the polyamide 6-6 is Orgasol® 3502 D NAT 1.

### Filament

As previously discussed, the invention relates to a composition as defined above, in the form of a filament suitable for 3D printing.

The diameter of the filament can be determined on the basis of the type of impression and easily determined by a person skilled in the art.

In one embodiment, the filament presents a diameter from about 1 to about 3 mm. In one embodiment, the diameter ranges from about 1.75 to about 2.85 mm. In one embodiment, the diameter is 1.75 mm. In one embodiment, the diameter is 2.85 mm. According to one embodiment, the diameter of the filament is measured by an electronic slide gauge, preferably the electronic slide gauge is the RS Pro® electronic digital caliper 150 mm/6. According to a preferred embodiment, the diameter of the filament is measured by a laser diameter measurement, preferably with the ODAC® 16XY device manufactured by Zumbach.

In one embodiment, the diameter of the filament is regular throughout its length.

Furthermore, the advantageous mechanical properties of the filament do not restrain its length.

In one embodiment, the filament presents a length from about 1 m to about 3000 m. In one embodiment, the filament length ranges from about 40 m to about 1500 m, preferably from about 80 m to about 1200 m, more preferably from about 90 m to about 1100 m, even more preferably is about 1000 m. In one embodiment, the filament length ranges from about 10 m to about 150 m, preferably from about 10 m to about 100 m, more preferably from about 30 m to about 70 m, even more preferably is about 50 m.

In one embodiment, the filament is easy to flexible and not easy to break. In one embodiment, the filament has a shore D hardness of at least 30, preferably from 30 to 100, more preferably from 30 to 40 at 20°C measured by a shore durometer.

In one embodiment, the filament is easy to flexible and not easy to break. In one embodiment, the filament has a shore D hardness of at least 40 at 20°C measured by a shore durometer.

According to one embodiment, the filament has a radius curvature of breaking ranging from more than 0 cm to 20 cm, preferably from more than 0 cm to 10 cm, more preferably from 3 cm to 7 cm. According to one embodiment, the filament has a radius curvature of breaking of about 5 cm. According to one embodiment, the filament has a radius curvature of breaking of about 2 cm, 3 cm, 4 cm, 5 cm, 6 cm, 7 cm, or 8. According to one embodiment, the radius curvature of breaking is determined by the methods and devices well-known by the skilled artisan. Advantageously, the filament is flexible and can be coiled.

According to one embodiment, the filament has a crushing resistance ranging from 20 MPa to 50 MPa, preferably from 25MPa to 40 MPa. According to one embodiment, the filament has a crushing resistance higher than 40MPa. According to one embodiment, the crushing resistance is determined by the methods and devices well-known by the skilled artisan.

Advantageously, when the filament has a crushing resistance of 40MPa or higher, an object may be printed from the filament of the invention with a printing outlet having a mean diameter of 0.2 mm or 0.4 mm.

Advantageously, when the filament has a crushing resistance ranging from 20 MPa to 40 MPa, an object may be printed from the filament of the invention with a printing outlet having a mean diameter of 0.8 mm or 0.6 mm.

### Filament coil

Thus, in a second aspect, the invention relates to a coil comprising at least one composition in the form of filament according to the invention.

In one embodiment, the coil has a weight ranging from 100 g to 3 kg. In one embodiment, the coil has a weight ranging from 300 g to 2.5 kg. In one embodiment, the coil has a weight ranging from 400 g to 2.5 kg. In one embodiment, the coil has a weight ranging from 500 g to 2 kg. In one embodiment, the coil has a weight of 1 kg.

### Printer

In a third aspect, the invention relates to a device implementing the filament or the filament coil according to the invention. In one embodiment, the device is a 3D printer, preferably a FDM type 3D printer.

### Process for manufacturing the shaped body

In a fourth aspect, the invention relates to a method for producing a shaped body, namely for the printing of a 3D object.

The method comprises the following steps:
a) feeding 3D modeling printer, preferably a Fused Deposition Modeling printer, with a filament as described in the present description;
b) printing the shaped green body;
c) optionally immersing the green body in a solvent for chemically debinding entirely or partially said green body;
d) optionally smoothing the shaped body of step (b) and/or the shaped body of step (c);
e) removing the at least one volatile organic compound of the filament composition by heating the green body to a temperature below the melting temperature of the at least one thermoplastic compound of said green body;
f) sintering the object of step (e) by heating, leading to the shaped body.

In one embodiment, the heating gradient of step (e) is:
- from 10°C/h to 25°C/h until reaching a temperature of 150°C; then the temperature of 150°C is maintained for 5 hours; and then
- optionally from 10°C/h to 25°C/h until reaching a temperature of 500°C; then the temperature of 500°C is maintained for 5 hours.

In one embodiment, the heating gradient of step (f) is from 50°C/h to 100°C/h until reaching a temperature of 1300°C; then the temperature of 1300°C is maintained for 1 hour.

According to one embodiment, step (e) is performed during step (f), that is that there is only one step of heating the green body (called step (g)); in this embodiment, it is necessary to have a temperature plate at a temperature from 100°C to 200°C, for example 150°C, in order to allow the volatile organic compound to evaporate. Otherwise, the green body melts at the sintering step.

Thus, in one embodiment, step (e) and step (f) are carried out in only one heating step (called step (g)), the following heating treatments being carried out successively, without returning to room temperature:
- increasing the temperature from 10°C/h to 25°C/h until reaching a temperature of 150°C; then maintaining the temperature of 150°C for 5 hours;
- increasing the temperature from 10°C/h to 25°C/h until reaching a temperature of 500°C; then optionally maintaining the temperature of 500°C for 5 hours; and
- increasing the temperature from 50°C/h to 100°C/h until reaching a temperature of 1300°C; then maintaining the temperature of 1300°C for 1 hour.

Thus, according to one embodiment, the method comprises the following steps:
a) feeding 3D modeling printer, preferably a Fused Deposition Modeling printer, with a filament as described in the present description; then
b) printing the shaped green body; then
c) optionally immersing the green body in a solvent; then
d) optionally smoothing the printed shaped green body of step (b) and/or the shaped body of step (c); then
g) heating the green body by increasing the temperature in three steps, without returning to room temperature:
   g1) increasing the temperature from 10°C/h to 25°C/h until reaching a temperature of 150°C; then maintaining the temperature of 150°C for 5 hours; then
   g2) increasing the temperature from 10°C/h to 25°C/h until reaching a temperature of 500°C; then optionally maintaining the temperature of 500°C for 5 hours; and then
   g3) increasing the temperature from 50°C/h to 100°C/h until reaching a temperature of 1300°C; then maintaining the temperature of 1300°C for 1 hour.

According to one embodiment, the smoothing step (d) is by contacting the surface of the shaped green body of step (b) and/or the surface of the shaped body of step (c) with a solvent selected from hexane, heptane, octane and mixtures thereof; gasoline, white spirit, benzene; toluene; ortho-, para-, or meta - dimethylbenzene and mixtures thereof; tetrahydrofuran and 2-methyltetrahydrofuran.

According to one embodiment, the sintering is by heating at a temperature ranging from about 800°C to about 1700°C.

### Shaped green body

This invention also relates to a shaped green body or a shaped body obtainable by the method as described above.

### EXAMPLES

The present invention is further illustrated by the following examples.

### Example 1: Compositions for 3D printing

Three compositions are prepared:
- composition 1 is a composition according to the invention, comprising phenol as volatile organic compound;
- composition 2 is a composition according to the invention, comprising citral as volatile organic compound;
- composition 3 is a comparative composition, that does not comprise volatile organic compound.

The amounts of the compounds of each of the three prepared compositions are the following (the percentages are expressed by volume relative to the volume of the total composition):

| %(v/v) | Composition 1 | Composition 2 | Composition 3 |
|---|---|---|---|
| Stainless steel powder | 51.9% | 51.9% | 53.9% |
| Paraffin | 13.8% | 13.8% | 14.3% |
| Polyamide 6-6: Orgasol® 3502 D NAT 1 | 3.8% | 3.8% | 3.9% |
| Elvax® 220W | 13.5% | 13.5% | 14.1% |
| Elvax® 40W | 13.3% | 13.3% | 13.8% |
| Phenol | 3.7% | 0% | 0% |
| Citral | 0% | 3.7% | 0% |
| TOTAL | 100% | 100% | 100% |

The used PEVA 20 was Elvax® 220W (DuPont™, 28 % (w/w) Vinyl Acetate comonomer content; Melt flow index (190°C/2.16kg): 150 g/10 min; Melting Point (DSC): 70°C).

The used PEVA 40 was Elvax® 40W (DuPont™, 40 % (w/w) Vinyl Acetate comonomer content; Melt flow index (190°C/2.16kg): 52 g/10 min; Melting Point (DSC): 47°C).

The ingredients are kneaded at a temperature of 140°C until a homogenous composition, which is sequentially extruded through a twin-screw extruder, ensuring the homogenous dispersion of the powder within the obtained compositions.

Then, the obtained compositions are extruded through a single-screw extruder in the form of filaments.

### Example 2: Filament mechanical properties

The aim of the experiment is to evidence that a filament of the invention is soft and able to melt once, at a temperature ranging from 50°C to 200°C. The experiment also aims at demonstrating that a filament of the invention does not melt again after the first and only one melting. Indeed, the filament must be soft during the step of printing a shaped body with a 3D modeling printer, such as a Fused Deposition Modeling printer, fed with said filament; then the filament must melt during a step of heating the obtained green body for example at a temperature ranging from 50°C to 200°C; and then the filament must not melt again, for example during a sintering step in particular at a temperature ranging from 800°C to 1700°C.

*Material*: the filaments whose composition are composition 1, 2 or 3 obtained in Example 1 are studied.

*Method*: the melt flow index of the three filaments are determined. If the melt flow index is equal to or higher than 80g/10 min (190°C/2.16kg), then the filament is heated at 150°C for 2 hours and the melt flow index of said filament is determined again.

*Results*: the filament obtained from composition 1 has a melt flow index of 120 g/10 min (190°C/2.16kg). After 2 hours of thermal treatment at 150°C, said filament has a melt flow index of 23 g/10 min (190°C/2.16kg); it is not able to melt again, for example during a sintering step.

The filament obtained from composition 2 has a melt flow index of 342 g/10 min (190°C/2.16kg). After 2 hours of thermal treatment at 150°C, said filament has a melt flow index of 25 g/10 min (190°C/2.16kg); it is not able to melt again, for example during a sintering step.

The filament obtained from composition 3 has a melt flow index of 40 g/10 min (190°C/2.16kg). It is barely not able to melt.

## Claims

1. A composition suitable for 3D printing, said composition being in the form of a filament and comprising:
a) a metal and/or ceramic powder;
b) an organic binding phase comprising two parts:
b1) at least one thermoplastic compound, preferably selected from thermoplastic polymers and waxes; and
b2) at least one volatile organic compound which has a vapor pressure at 50°C, ranging from more than 0 bar to 0.05 bar;
wherein the amount of the at least one volatile organic compound ranges from more than 0.5% to 40% (v/v) by volume relative to the total volume of the composition.

2. The composition according to claim 1, wherein the at least one volatile organic compound has a further vapor pressure at 150°C that is equals or higher than 0.1 bar, preferably ranging from 0.1 bar to 1 bar.

3. The composition according to claim **1** or claim **2**, wherein the at least one thermoplastic compound is selected from: waxes of parabens, paraffin, esters, and/or fatty alcohols; and thermoplastic homopolymers and/or copolymers of polyolefins, polacrylates, polymethacrylates, poly(alkylene glycol)s, polyamides, polyvinylics, polystyrenes polyacetals, polyesters, and poly(ethylene-vinyl acetate)s.

4. The composition according to any one of claims **1** to **3**, wherein the at least one volatile organic compound is selected from: aromatic compounds, preferably from benzoic acid, phenols, naphtalene, acetamide, 2-bromo-4-phenylphenol, diacetamide, alpha-hydroxyisobutyric acid, 1-naphtol, propionamide, tiglic acid, vanillin, bromoacetic acid, 4-bromobiphenyl, 2-bromo-4,6-dichlorophenol, 4-tert-butylphenol, 4-chlorobiphenyl, coumarin, 1,4-dibromobenzene, d-dimethyl tartrate, maleic anhydride, thymol, trichloroacetic acid and derivatives thereof, in particular phenol; essential oils, preferably essential oils comprising or consisting of citral, isoamyl acetate and/or linalol; and their mixtures thereof.

5. The composition according to any one of claims **1** to **4**, wherein said composition comprises or consists of:
- from 40% to 60% (v/v) of said metal and/or ceramic powder;
- from more than 0.5% to 40% (v/v), preferably from 2% to 10% (v/v), more preferably about 4% (v/v) of said at least one volatile organic compound; and
- from 1% to 59% (v/v) of said at least one thermoplastic compound, the percentages (v/v) being expressed by volume relative to the total volume of the composition.

6. The composition according to any one of claims 1 to 5, wherein the thermoplastic compound is a mixture of thermoplastic polymers, preferably a mixture of poly(ethylene-vinyl acetate)s, more preferably a mixture of low and high vinyl acetate proportion poly(ethylene-vinyl acetate), even more preferably a mixture of low and high vinyl acetate proportion poly(ethylene-vinyl acetate) having a low to high vinyl acetate proportion poly(ethylene-vinyl acetate) being in a 3:1 to 1:1 volume ratio.

7. The composition according to any one of claims 1 to 6, wherein the ceramic and/or metal powder is selected from ceramic powder comprising or consisting of one or more minerals, preferably selected from native elements, carbides, sulfides, halides, oxides, hydroxides, carbonates, borates, sulfates, chromates, nitrates, molybdates, tungstates, phosphates, arsenates, vanadates, silicates and aluminosilicates; and metal powder comprising or consisting of one or more component selected from alkali metals, alkaline earth metals, lanthanides, actinides, transition metals, poor metals, metalloids, metal oxides, metal carbides, metal borides and metal nitrides.

8. The composition according to any one of claims **1** to **7**, wherein the ceramic and/or metal powder presents a specific surface ranging from 0.5 to 30 m²/g, measured by a surface area analyzer, preferably said analyzer using a gas sorption method.

9. The composition according to any one of claims **1** to **8**, wherein the filament presents a shore D hardness ranging from 30 to 100 at 20°C measured by a shore durometer.

10. A filament coil comprising at least one composition as described in any one of claims **1** to **9.**

11. A 3D printer for producing shaped bodies, said 3D printer comprising the composition according to any one of claims **1** to **9** or the filament coil according to claim **10.**

12. A method for producing a shaped body, said method comprising:
a) feeding 3D modeling printer, preferably a Fused Deposition Modeling printer, with a filament as described in any one of claims **1** to **9**; then
b) printing the shaped green body; then
c) optionally immersing the green body in a solvent for chemically debinding entirely or partially said green body; then
d) optionally smoothing the shaped body of step (b) and/or the shaped body of step (c); then
e) removing the at least one volatile organic compound of the filament composition by heating the green body to a temperature below the melting temperature of the at least one thermoplastic compound of said green body; and then
f) sintering the object of step (e) by heating, leading to the shaped body.

13. The method according to claim **12**, wherein the smoothing step (d) is by contacting the surface of the shaped body of step (b) and/or the shaped body of step (c) with a solvent selected from hexane, heptane, octane and mixtures thereof; gasoline, white spirit, benzene; toluene; ortho-, para-, or meta-dimethylbenzene and mixtures thereof; tetrahydrofuran and 2-methyltetrahydrofuran.

14. The method according to claim **12** or **13**, wherein the sintering of step (f) is by heating at a temperature ranging from about 800°C to about 1700°C.

15. A shaped green body or a shaped body obtainable by the method according to any one of claims **12** to **14.**
